(19) Europäisches Patentamt
European Patent Office
Office européen des brevets

(11) **EP 4 092 927 A1**

(12) **EUROPEAN PATENT APPLICATION**
published in accordance with Art. 153(4) EPC

(43) Date of publication:
**23.11.2022 Bulletin 2022/47**

(21) Application number: **21744947.9**

(22) Date of filing: **14.01.2021**

(51) International Patent Classification (IPC):
**H04B 7/06** (2006.01)   **H04B 7/08** (2006.01)
**H04B 1/401** (2015.01)   **H01Q 21/00** (2006.01)

(86) International application number:
**PCT/CN2021/071747**

(87) International publication number:
**WO 2021/147768 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2020 CN 202010070785**

(71) Applicant: **GUANGDONG OPPO MOBILE
TELECOMMUNICATIONS
CORP., LTD.
Wusha, Chang'an
Dongguan
Guangdong 523860 (CN)**

(72) Inventor: **LIU, Chang
Dongguan, Guangdong 523860 (CN)**

(74) Representative: **Taor, Simon Edward William et al
Venner Shipley LLP
200 Aldersgate
London EC1A 4HD (GB)**

(54) **CUSTOMER PREMISE EQUIPMENT**

(57) Customer premise equipment. The customer premise equipment comprises: N antennas, the N antennas being provided at an interval in the circumferential direction of the client premise equipment, and radiating surfaces of the N antennas facing at least three different directions; a radiofrequency circuit (242), connected respectively to the N antennas, and configured to control the antennas to transmit and receive antenna signals and to correspondingly measure network information of the antenna signals; and, a processor (22), connected to the radiofrequency circuit (242), the processor (22) being configured: to configure multiple first transmitting/receiving antenna groups from the N antennas, where the first transmitting/receiving antenna groups are constituted by M antennas, and the M antennas of the first transmitting/receiving antenna groups are provided with two radiating surfaces adjacent to each other and facing different directions; to acquire, on the basis of the multiple first transmitting/receiving antenna groups, the correspondingly measured network information of the antenna signals; to determine a target first transmitting/receiving antenna group on the basis of the multiple pieces of network information measured; and to configure the radiofrequency circuit (242) to control the target first antenna group to transmit and receive the antenna signals.

FIG. 8

**Description**

CROSS REFERENCE TO RELATED APPLICATIONS

This application claims the benefit of priority of a China Patent Application No. 2020100707855 submitted to State Intellectual Property Office of the P.R.C. on January 21, 2020, entitled "CUSTOMER PREMISE EQUIPMENT", the contents of which are incorporated herein by reference in their entirety.

BACKGROUND OF THE DISCLOSURE

1. Field of the Disclosure

The present application relates to radio frequency (RF) technologies, and in particular to a customer premise equipment.

2. Description of the Related Art

Statement here provides only background information related to the present application, rather than necessarily constituting an existing exemplary technology.

A Customer Premise Equipment (CPE) is a mobile signal access device for receiving mobile signals and forwarding them with wireless Wi-Fi signals. It is also an equipment for converting high-speed signals (e.g., 4G or 5G signals) into Wi-Fi signals. A transmitting/receiving antenna in the customer premise equipment is fastened and installed inside the customer premise equipment, in which RF path controlling the transmitting/receiving antenna to transmit/receive antenna signals is fixed. The communication performance of the customer premise equipment will be affected when there is a change of the location of the customer premise equipment and its environment.

SUMMARY

According to various embodiments of the present application, a customer premise equipment is provided.

A customer premise equipment includes:

N antennas, provided at intervals around a periphery of the customer premise equipment, radiation surfaces of the N antennas facing at least three different directions;

a radio frequency (RF) circuit, connected to the N antennas and configured to control the antennas to transmit and receive antenna signals and to correspondingly measure network information of the antenna signals; and

a processor, connected to the RF circuit and configured to:

configure a plurality of first transceiving antenna groups from the N antennas, wherein the first transceiving antenna group is made up by M antennas, and the M antennas of the first transceiving antenna group are provided with two adjacent radiation surfaces facing different directions, where $2 \leq M < N$ and $N \geq 3$;

obtain the network information of the antenna signals correspondingly measured based on the plurality of first transceiving antenna groups;

determine a target first transceiving antenna group based on a plurality of pieces of the measured network information; and

configure the RF circuit to control the target first antenna group to transmit and receive the antenna signals.

A customer premise equipment includes:

eight antennas, including four paired antenna groups, the four antenna groups being distributed at intervals on four surfaces around a periphery of the customer premise equipment, and two antennas of a same antenna group being distributed on a same surface;

a radio frequency (RF) circuit, connected to the eight antennas and configured to control the antennas to transmit and receive antenna signals and to correspondingly measure network information of the antenna signals; and

a processor, connected to the RF circuit and configured to:

configure a plurality of first transceiving antenna groups from the eight antennas, wherein the first transceiving antenna group is made up by four antennas, and the four antennas are evenly distributed on two adjacent surfaces;

obtain the network information of the antenna signals correspondingly measured based on the plurality of first transceiving antenna groups;

determine a target first transceiving antenna group based on a plurality of pieces of the measured network information; and

control the target first antenna group to transmit and receive the antenna signals.

The N antennas in the afore-mentioned customer premise equipment can be configured as the plurality of first transceiving antenna groups for transmitting and receiving the antenna signals. Regardless of whether the current environment of the customer premise equipment changes or not, the customer premise equipment can measure the network information of the antenna signals corresponding to the plurality of first transceiving antenna groups measured by the RF circuit to determine the target first transceiving antenna group. This can effectively improve the quality of received antenna signals, thereby improving the communication performance of the customer premise equipment.

The details of one or more embodiments of the present application are set forth in the following drawings and description. Other features, objectives and advantages of this application will become apparent from the description, drawings and claims.

BRIEF DESCRIPTION OF THE DRAWINGS

For explaining the technical solutions used in the existing arts or the embodiments of the present application more clearly, the appending figures to be used in describing the existing arts or the embodiments will be briefly introduced below. Obviously, the appending figures described below are only some of the embodiments of the present application, and those of ordinary skill in the art can further obtain other figures according to these figures without making any inventive effort.

FIG. 1 is a schematic diagram illustrating a network system architecture according to an embodiment.

FIG. 2 is a schematic diagram illustrating an external structure of a customer premise equipment according to an embodiment.

FIG. 3 is a schematic diagram illustrating an internal structure of a customer premise equipment according to an embodiment.

FIG. 4 is a schematic diagram illustrating an internal structure of a customer premise equipment according to another embodiment.

FIG. 5 is a schematic diagram illustrating a distribution of three antennas according to an embodiment.

FIG. 6 is a schematic diagram illustrating a distribution of four antennas according to an embodiment.

FIG. 7a is a schematic diagram illustrating a distribution of eight antennas in a customer premise equipment according to an embodiment.

FIG. 7b is a schematic diagram illustrating distributed positions of eight antennas in a customer premise equipment according to an embodiment.

FIG. 7c is a schematic diagram illustrating an arrangement of eight antennas in a customer premise equipment according to an embodiment.

FIG. 8 is a schematic diagram illustrating connections between antenna ports and various antennas according to an embodiment.

FIG. 9 is a schematic diagram illustrating a composition of a first transceiving antenna group according to an embodiment.

FIG. 10 is a schematic diagram illustrating a composition of a second transceiving antenna group according to an embodiment.

FIG. 11 is a schematic diagram illustrating switches between transceiving antenna groups according to an embodiment.

FIG. 12 is a schematic diagram illustrating a composition of a third transceiving antenna group according to an embodiment.

FIG. 13 is a schematic diagram illustrating switches between transceiving antenna groups according to an embodiment.

FIG. 14 is a schematic diagram illustrating switches between transceiving antenna groups according to another embodiment.

FIG. 15 is a schematic diagram illustrating switches between transceiving antenna groups according to still another embodiment.

## DETAILED DESCRIPTION OF THE EMBODIMENTS

To make the objectives, technical solutions, and advantages of the present application more clear and specific, the present application is described in further detail below with reference to the embodiments in combination with the appended drawings. It should be understood that the specific embodiments described herein are merely for interpreting the present application and the present application is not limited thereto.

An expression "configured to" used in the present application may be interchangeably used with, for example, "suitable for", "having a capacity to", "capable of', or "designed to" in a hardware or software manner according to a situation. In a certain situation, an expressed "an equipment configured to" may imply that the equipment is "capable of' together with other equipments or components. For example, "a processor configured to perform A, B, and C" may imply a processor for performing a corresponding operation, and the processor is capable of performing corresponding operations by executing one or more software programs stored in a memory device.

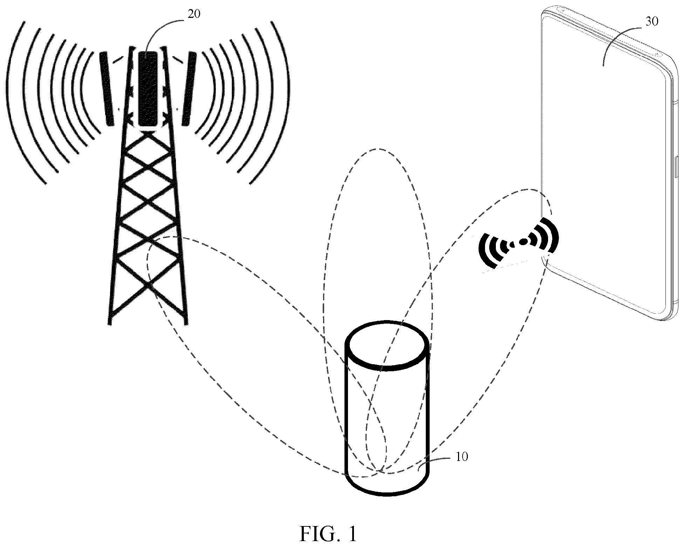

Referring to FIG. 1, a schematic diagram of a network system architecture according to an embodiment of the present application is shown. In the system architecture shown in FIG. 1, the customer premise equipment 10 may be connected to a first base station 20 in a first network system and access a core network through the first base station 20. The customer premise equipment 10 is used to implement a network access function, converting the operator public network WAN to the user home local area network LAN, and simultaneous access to the network by multiple mobile customer premises 10 may be supported. In addition, the vicinity of the customer premise equipment 10 may be also deployed with a cell and a second base station of a second network system, or may not be deployed with the cell and the second base station of the second RF system. The first network system is different from the second network system, for example, the first network system may be a 4G system, and the second network system may be a 5G system. Alternatively, the first network system may be a 5G system, and the second network system may be a future Public Land Mobile Network (PLMN) system evolved after 5G. The embodiments of the present application do not specifically limit what kind of RF system the first network system and the second network system specifically belong to.

When the customer premise equipment 10 is connected to a 5G communication system, the customer premise equipment 10 may transmit and receive data with a corresponding base station through a beam formed by a 5G millimeter wave antenna module, and the beam needs to be directed to an antenna beam of the base station, so as to facilitate the customer premise equipment 10 to transmit uplink data to the base station or receive downlink data transmitted by the base station.

The customer premise equipment 10 is used for realizing a network access function and converting an operator public network WAN into a user home local area network LAN. According to the current internet broadband access mode, the access modes can be classified into FTTH (fiber to the home), DSL (digital telephone line access), Cable (Cable television line access), and Mobile (Mobile access, i.e., wireless CPE). The customer premise equipment is a mobile signal access equipment which receives mobile signals and forwards the mobile signals through wireless WIFI signals. It is also an equipment which converts high-speed 4G or 5G signals into Wi-Fi signals, and simultaneous access to a network by a plurality of mobile terminals is supported.

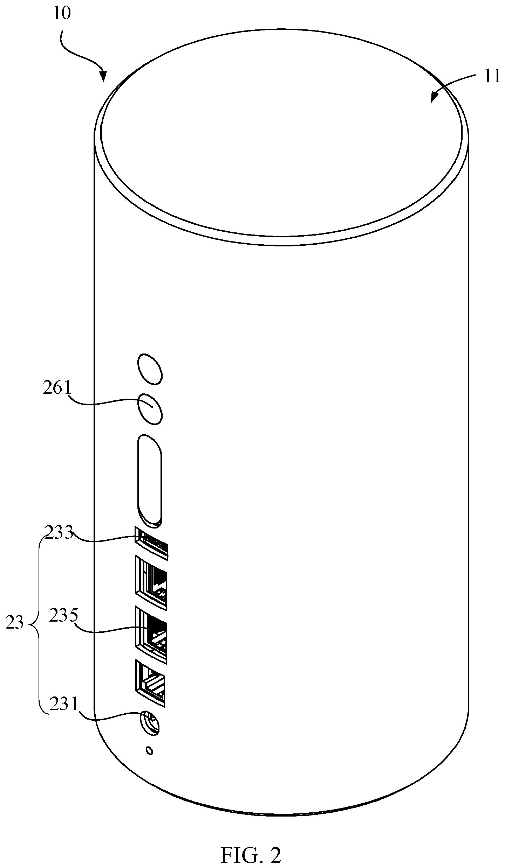

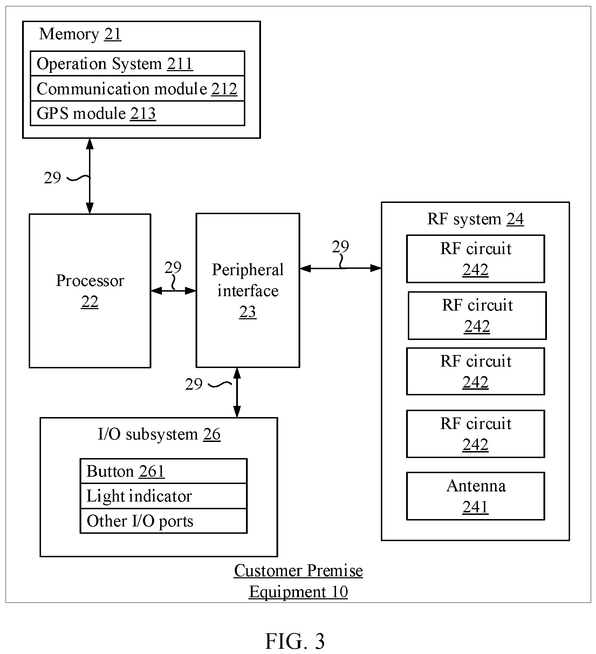

Referring to FIGs. 2 and 3, an embodiment of the present application provides a customer premise equipment. Among other things, the customer premise equipment 10 includes a housing 11, a memory 21 (which optionally includes one or more computer-readable storage media), a processor 22, a peripheral interface 23, a Radio Frequency (RF) system 24, and an input/output (I/O) subsystem 26. These components optionally communicate with each other via one or more communication buses or signal lines 29. Those skilled in the art will appreciate that the customer premise equipment is not limited by the customer premise equipment illustrated in FIG. 2 and may include more or fewer components than those illustrated, or some components may be combined, or a different arrangement of components is provided. The various components shown in FIG. 2 are implemented in hardware, software, or a combination of both hardware and software, including one or more signal processing and/or application specific integrated circuits.

The housing 11 is roughly cylindrical. The appearance of the customer premise equipment 10 is mainly provided by the housing 11. In other embodiments, the housing 11 may have other shapes, such as a prismatic form. The peripheral interface 23 and an external port 27 are exposed on the housing 11 to the outside. The peripheral interface 23 includes a power port 231, a Universal Serial Bus (USB) port 233, a network cable port 235, and so on. The power port 231 is used to connect an external power supply to use the external power supply to supply electric power to the customer premise equipment 10, and the USB port 233 can be used for data transmission between the customer premise equipment 10 and an external device. Of course, the USB port 233 and the power port 231 can be integrated into one entity to simplify the arrangement of the peripheral interface 23 of the customer premise equipment 10. The network cable port 235 may further include a wired network input terminal and a wired network output terminal. The customer premise equipment 10 may be connected to a network via the wired network input terminal and then be connected to other equipments via one or more wired network output terminals. Of course, in one embodiment, the wired network output terminal can be omitted, that is, after the customer premise equipment 10 uses the wired network input terminal to access the network, the RF system 24 is used to convert the wired network into a wireless network (such as Wi-Fi) for allowing an external device to access the network. Of course, both the wired network input terminal and the wired network output terminal can be omitted. In this implementation, the customer premise equipment 10 can access a cellular network (also known as a mobile network) via the RF system 24 and then convert it into Wi-Fi signals for allowing an external device to access the network.

The memory 21 optionally includes a high-speed random access memory, and also optionally includes a non-volatile memory, such as one or more magnetic disk storage devices, flash memory devices, or other non-volatile solid-state memory devices. Exemplarily, the software components stored in the memory 21 include an operating system 211, a communication module (or instruction sets) 212, a Global Positioning System (GPS) module (or instruction sets) 213, and the like.

The processor 22 and other control circuitry (e.g., a control circuit in the RF circuitry 24) may be used to control the operation of customer premise equipment 10. The processor 22 may be based on one or more microprocessors, microcontrollers, digital signal processors, baseband processors, power management units, audio codec chips, application specific integrated circuits, and the like.

The processor 22 may be configured to implement a control algorithm that controls the use of antennas in the customer premise equipment 10. For example, the processor 22 may be configured to control the RF system 24 to select multiple antennas to form a plurality of transceiving antenna groups and then select a target antenna group from the plurality of transceiving antenna groups to transmit and/or receive antenna signals.

The I/O subsystem 26 couples input/output peripheral devices on the customer premise equipment 10, such as a keypad and other input control devices, to the peripheral interface 23. The I/O subsystem 26 optionally includes a touch screen, buttons, a lever, a touch pad, a keypad, a keyboard, a tone generator, an accelerometer (a motion sensor), an ambient light sensor and other sensors, light emitting diodes and other status indicators, data ports, and the like. Exemplarily, the housing 11 may also be provided with a structure such as a button 261, and the button 261 is used to control the operation state of the customer premise equipment 10. A user may control the operation of the customer premise equipment 10 by inputting commands via the I/O subsystem 26 and may receive status information and other outputs from the customer premise equipment 10 using the output resources of the I/O subsystem 26. For example, the user can activate the customer premise equipment 10 or shut down the customer premise equipment 10 as long as the button 261 is pressed. Of course, the housing 11 can also be provided with a light indicator, and the like, for prompting the operation state of the customer premise equipment 10.

In one embodiment, the button 261 and the peripheral interface 23 are exposed on a same side of the housing 11. This deployment facilitates the assembly of the button 261 and the peripheral interface 23, improves the appearance of the customer premise equipment 10, and can improve convenience. Of course, this deployment can be replaced with other deployments, for example, the peripheral interface 23 and the button 261 can be exposed on different sides of the housing 11, respectively.

The RF system 24 includes a plurality of antennas 241, and the antennas 241 may be formed of any suitable type of antennas. For example, the antennas 241 may include an antenna with a resonating element formed from the following antenna structure: at least one of an array antenna structure, a loop antenna structure, a patch antenna structure, a slot antenna structure, a helical antenna structure, a strip antenna, a monopole antenna, a dipole antenna, and the like. Different types of antennas may be used for different frequency bands and frequency band combinations. There may be a plurality of antennas in the customer premise equipment 10. For example, a plurality of 5G antennas for transceiving at a sub-6GHz band may be included. These antennas may be directional antennas or non-directional antennas, or they may be fixed.

The RF system 24 also includes a plurality of RF circuits 242 for processing RF signals of different frequency bands, for example, a satellite positioning RF circuitry for receiving satellite positioning signals at 1575MHz, a Wi-Fi and Bluetooth transceiver RF circuitry for handling the 2.4GHz and 5GHz bands of IEEE802.11 communications, a cellular phone transceiver RF circuitry for handling wireless communications at cellular phone bands such as 850MHz, 900MHz, 1800MHz, 1900MHz and 2100MHz and Sub-6G bands. The Sub-6G band can specifically include a 2.496GHz-6GHz frequency band and a 3.3GHz-6GHz frequency band.

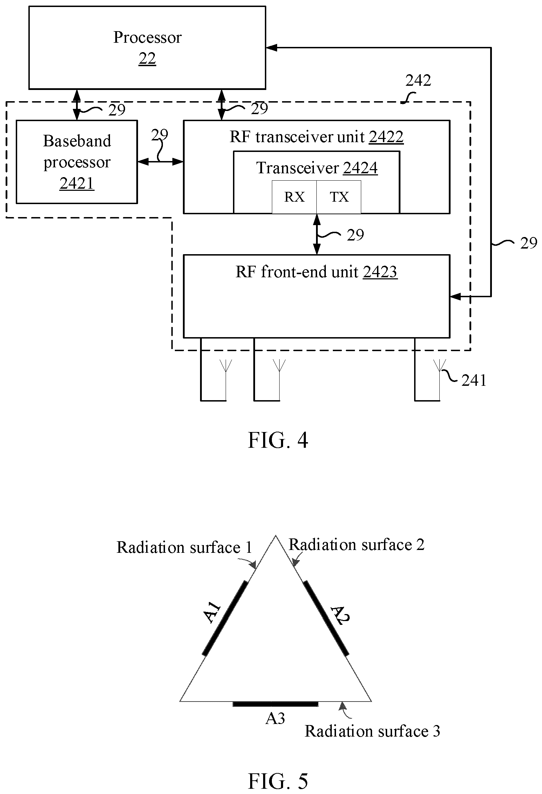

Referring to FIG. 4, exemplarily, the RF circuit 242 may also include a baseband processor 2421, an RF transceiver unit 2422 and an RF front-end unit 2423. The baseband processor 2421 may provide network information to the processor 22. The network information may include raw and processed information associated with wireless performance metrics of the received antenna signals, such as received Power, transmitted Power, Reference Signal Received Power (RSRP), Reference Signal Received Quality (RSRQ), Received Signal Strength Indicator (RSSI), Signal to Noise Ratio (SNR), Rank of MIMO channel matrix, Carrier to Interference plus Noise Ratio (RS-CINR), frame error rate, bit error rate, channel quality measurement based on signal quality data such as Ec/Io or c/No data, information on whether a response (reply) corresponding to a request from a mobile terminal is being received from a base station, information on whether a network access procedure is successful, and the like.

The processor 22 may analyze the received network information and, in response, the processor 22 (or, if desired, the baseband processor 2421) may send control commands for controlling the RF system 24. For example, the processor 22 may send a control command to control a plurality of transceiving antenna groups of the RF system 24 to be in an operation state in turn, and can then determine a target transceiving antenna group from the plurality of transceiving antenna groups to control the target transceiving antenna group to transmit and receive antenna signals. The transceiving antenna group includes a plurality of antennas.

The RF transceiver unit 2422 may include one or more RF transceivers, such as a transceiver 2424 (e.g., one or more transceivers shared among the antennas, one transceiver per antenna, etc.). Exemplarily, the transceiver 2424 may include a transmitter (e.g., transmitter TX) and a receiver (e.g., receiver RX), or may include only a receiver (e.g., receiver RX) or only a transmitter (e.g., transmitter TX). For example, the transceiver may be used to implement frequency conversion processing between intermediate frequency signals and baseband signals, or/and to implement frequency conversion processing between intermediate frequency signals and high frequency signals, and so on.

The baseband processor 2421 may receive digital data to be transmitted from the processor 22 and may also transmit corresponding antenna signals using the RF transceiver unit 2422. The RF front-end unit 2423 may be coupled between the RF transceiver unit 2422 and the antenna 241 and may be used to propagate the RF signals generated by the transmitters 2424 and 2426 to the antenna 241. The RF front-end unit 2423 may include RF switches, impedance matching circuits, filters, and other circuitry used to form an interface between the antenna 241 and the RF transceiver unit 2422.

In one embodiment, an RF switch of the RF front-end unit 2423 may include a plurality of interfaces, and the plurality of interfaces may be a Mobile Industry Processor Interface (MIPI) and/or a General-purpose input/output (GPIO) interface. Its corresponding control unit can be a MIPI control unit and/or a GPIO control unit. A plurality of pins of each interface can be connected to a plurality of antennas in a one-to-one correspondence. When RF paths between a transceiving antenna group and the RF transceiver unit 2422 need to be connected, the MIPI control unit can correspondingly output clock and data signals to corresponding pins connected to each antenna in the transceiving antenna group. The GPIO control unit can correspondingly output high-level signals to the corresponding pins connected to each antenna in the transceiving antenna group.

In one embodiment, the RF switch can also be a single-pole multi-throw switch, a multi-pole multi-throw switch, an electronic switch, etc., and a corresponding control unit can be deployed to control the RF switch to connect the RF path between each antenna in the transceiving antenna group and the RF transceiver unit 2422 correspondingly.

When an RF front-end module 312 controls RF paths between a transceiving antenna group and the RF transceiver unit 2422 to be connected, the RF transceiver unit 2422 can obtain antenna signals received by the transceiving antenna group, and analyze and process the received antenna signals to obtain network information of the antenna signals.

Specifically, the customer premise equipment 10 can control any transceiving antenna group to obtain corresponding channel quality information among the network information when the transceiving antenna group is in an operation state. The channel quality information may include at least one of modulation order, code rate or spectrum efficiency. The channel quality can be quantified as an index of Channel Quality Indicator (CQI) to represent the quality of the channel. The channel quality information obtained by the customer premise equipment 10 can reflect the quality of a current channel. The embodiments of the present application are illustrated by taking the obtained spectrum efficiency as an example.

Exemplarily, the customer premise equipment 10 may obtain a CQI value $cqi_k$ per stream by Sinr according to a CQI-Sinr mapping table as shown in Table 1 and obtain corresponding code rate $R_k$ per stream according to a CQI-code rate mapping table as shown in Table 2, and finally, obtain corresponding spectrum efficiency according to a spectrum efficiency formula:

$$efficiency = \sum_{n=1}^{Rank} m * R_k$$

Table 1: CQI-Sinr mapping table

| CQI | 1 | 2 | 3 | 4 | 5 | 6 | 7 | 8 | 9 | 10 | 11 | 12 | 13 | 14 | 15 |
|------|----|----|-------|-------|------|------|-----|------|-----|-------|------|------|-------|-------|----|
| Sinr | -6 | -4 | -2.75 | -0.75 | 1.25 | 2.75 | 5.0 | 6.75 | 8.5 | 10.75 | 12.5 | 14.5 | 16.25 | 17.75 | 20 |

Table 2: CQI-code rate mapping table

| CQI number | Modulation | Code rate x1024 | Efficiency |
|------------|------------|-----------------|------------|
| 0 | Out of range | | |
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

The modulation order determines the number of bits transmitted in one symbol. For example, Quadrature Phase Shift Keying (QPSK) corresponds to a modulation order of 2, 16 Quadrature Amplitude Modulation (QAM) has a modulation order of 4, and 64QAM has a modulation order of 6.

The code rate is a ratio of the number of information bits in a transport block to the total number of bits in a physical channel.

The spectrum efficiency represents the information bits that can be carried by a resource element (RE).

It can be understood that the base station does not know the condition of a data channel before transmitting downlink data. In order to increase the reliability of data transmission, the customer premise equipment 10 can measure the channel quality and feed it back to the network device. The communication protocol quantifies the channel quality as a sequence of 0-15 and defines it as CQI. Each CQI corresponds to a mapping.

In one embodiment, the RF system 24 includes N antennas, in which the N antennas are provided at intervals around the periphery of the customer premise equipment 10, and radiation surfaces of the N antennas faces at least three different directions. It can also be understood that each antenna has a radiation surface, and the radiation surface can be understood as a plane where a radiation body of the antenna for radiating the antenna signals is located. The radiation surfaces of the N antennas face at least three directions to achieve 360° omnidirectional coverage on the horizontal plane. As long as the directions of the radiation surfaces of the antennas are different, corresponding ranges of scanning beams of the antennas are different. The N antennas can be arranged at different positions of the customer premise equipment 10 so that the radiation surfaces of the N antennas face at least three directions. In this way, the ranges of scanning beams of the antennas can achieve 360° omnidirectional coverage on the horizontal plane.

The N antennas may include directional antennas and/or non-directional antennas. N antennas can transmit and receive antenna signals at preset frequency bands. Exemplarily, the N antennas may be directional antennas or omnidirectional antennas, which are used to transmit and receive antenna signals. For example, the N antennas may be 5G antennas, 4G antennas, Wi-Fi antennas, Bluetooth antennas, etc., which are used to transmit and receive antenna signals at corresponding frequency bands.

The number of the antennas N can be 2, 3, 4, 6, 8, 10, etc. to meet communication requirements of the customer premise equipment. The customer premise equipment can select M antennas from the N antennas and serve the M antennas as a transceiving antenna group to "fit" uplink and downlink directions "directionally" with respect to the base station to accomplish transmission and reception of antenna signals. M is less than or equal to N.

It needs to be noted that the number of M can be set according to Multiple Input Multiple Output (MIMO) technology that the customer premise 10 needs to support. For example, if the customer premise equipment 10 needs to support 2*2 MIMO, two antennas need to be selected from a plurality of antennas as the transceiving antenna group; if the customer premise equipment 10 needs to support 4*4 MIMO, four antennas need to be selected from a plurality of antennas as the transceiving antenna group, and so on.

In one embodiment, the processor 22 is configured to configure a plurality of first transceiving antenna groups from the N antennas, wherein the first transceiving antenna group is made up by M antennas, and the M antennas of the first transceiving antenna group are provided with two adjacent radiation surfaces facing different directions, where $2 \leq M < N$ and $N \geq 3$. It can also be understood that if the first transceiving antenna group consists of (k1+k2) antennas, the radiation surfaces of the k1 antennas face one direction, the radiation surfaces of the k2 antennas face another direction, and the radiation surface of one of the k1 antennas is adjacent to the radiation surface of one of the k2 antennas.

According to M*M MIMO technology that the customer premise equipment 10 can support based on its own RF system, the processor 22 may be configured to select M antennas from the N antennas to construct a plurality of first transceiving antenna groups. Exemplarily, when the customer premise equipment 10 supports 2*2 MIMO, the processor 22 may be configured to control the RF circuit to select two antennas from the N antennas to construct a plurality of first transceiving antenna groups.

Exemplarily, as shown in FIG. 5, in a case of N=3, the radiation surfaces of three antennas A1, A2, and A3 face three directions, the orientation of each radiation surface is different, and 360° omnidirectional coverage on the horizontal plane can be realized. It can also be understood that each of the three antennas has a radiation surface, the antenna A1 has a radiation surface 1, the antenna A2 has a radiation surface 2, the antenna A3 has a radiation surface 3, the three radiation surfaces are arranged in order, the orientations of the three radiation surfaces are different from each other, and 360° omnidirectional coverage of scanning beams on the horizontal plane can be realized. The processor 22 may be configured to configure a plurality of first transceiving antenna groups from three antennas, wherein the first transceiving antenna group may be made up by two antennas, and the two antennas of the first transceiving antenna group are provided with two adjacent radiation surfaces facing different directions. For example, the processor 22 may be configured to select two antennas from any of the three antennas A1, A2, A3 to construct three first transceiving antenna groups, which may be first transceiving antenna group (A1, A2), (A2, A3), (A3, A1).

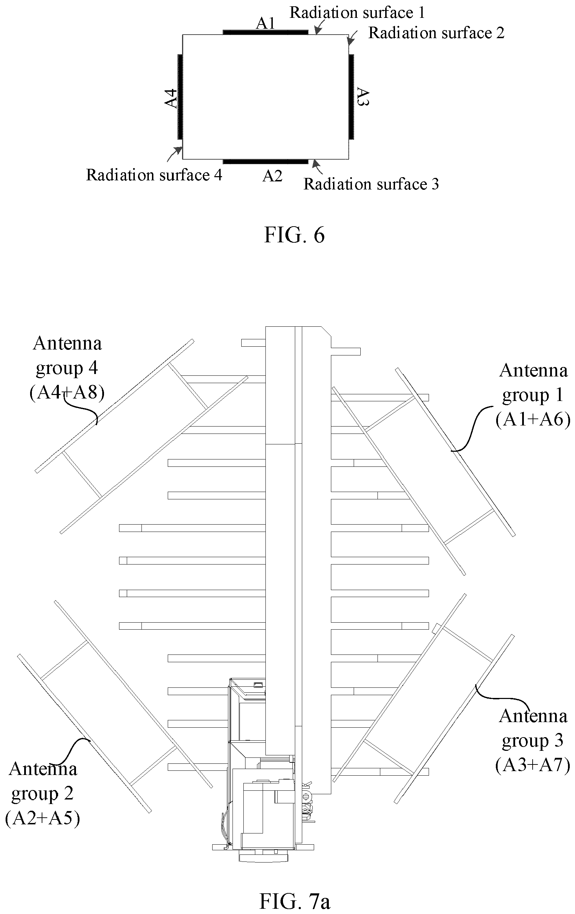

As shown in FIG. 6, in a case of N=4, the radiation surfaces of four antennas face four directions, the orientation of each radiation surface is different, and 360° omnidirectional coverage on the horizontal plane can be realized. It can be understood that each of the four antennas A1, A2, A3, A4 has a radiation surface, the antenna A1 has a radiation surface 1, the antenna A2 has a radiation surface 2, the antenna A3 has a radiation surface 3, the antenna A4 has a radiation surface 4, the four radiation surfaces are arranged in order, the orientations of the four radiation surfaces are different from each other, and 360° omnidirectional coverage of scanning beams on the horizontal plane can be realized. The processor 22 may be configured to configure a plurality of first transceiving antenna groups from four antennas, wherein the first transceiving antenna group may be made up by two antennas, and the two antennas of the first transceiving antenna group are provided with two adjacent radiation surfaces facing different directions. For example, the processor 22 may be configured to select two antennas from any of the four antennas A1, A2, A3, A4 to construct four first transceiving antenna groups, which may be first transceiving antenna group (A1, A2), (A2, A3), (A3, A4), (A4, A1).

The processor 22 may be configured to: control the RF circuit 242 to measure the network information of the antenna signals received when each first transceiving antenna group is in the operation state such that the processor 22 may obtain the network information of the antenna signals corresponding to the plurality of first transceiving antenna groups from the RF circuit 242; and determine a target first transceiving antenna group based on a plurality of pieces of measured network information; and when the target first transceiving antenna group is determined, the processor 22 may configure the RF circuit 242 to control the target antenna group to be in the operation state to transmit and receive the antenna signals.

Specifically, the processor 22 is configured to control the RF circuit 242 to sequentially connect the RF path between each first transceiving antenna group and the RF transceiver unit 2422. For example, the RF path to the RF transceiver unit 2422 is connected in the following order: the first transceiving antenna group (A1, A2) → the first transceiving antenna group (A2, A3) → the first transceiving antenna group (A3, A4) → the first transceiving antenna group (A4, A1), such that each first transceiving antenna group is in the operation state, and the RF circuit 242 can measure the network information of received antenna signals of each first transceiving antenna group correspondingly. From a plurality of pieces of network information obtained by the RF circuit 242, the processor 22 may identify a first transceiving antenna group with maximum network information and serve it as the target first transceiving antenna group. Exemplarily, a reference signal parameter is selected from at least one signal parameter of the network information, and a reference signal parameter with a maximum value is identified from the plurality of pieces of network information, and the network information having the reference signal parameter with a maximum value is used as target network information. In an embodiment of the present application, the network information may be illustrated by taking reference signal received power (RSRP) as an example. That is, the processor may be configured to obtain a plurality of reference signal received powers of the plurality of transceiving antenna groups, obtain a maximum value among the plurality of reference signal received powers, and use the maximum value as the target network information. A first transceiving antenna group corresponding to the target network information is the target first transceiving antenna group. The processor 22 configures the RF circuit 242 to control the target first transceiving antenna group to transmit and receive the antenna signals.

The processor 22 may be further configured to control the RF circuit 242 to connect the RF path associated with the target first transceiving antenna group according to the determined target first transceiving antenna group, such that the target first transceiving antenna group can transmit and receive corresponding antenna signals.

In the embodiments of the present application, N antennas can be arranged in the customer premise equipment 10, and the radiation surfaces of the N antennas face at least three different directions. According to communication requirements of the customer premise equipment 10, the processor 22 can be configured to select M antennas from the N antennas as a plurality of first transceiving antenna groups and then control the plurality of first transceiving antenna groups to measure network information of antenna signals correspondingly, such that a target first transceiving antenna group is identified from the plurality of first transceiving antenna groups. Therefore, automatic searching for the target first transceiving antenna group to "fit" uplink and downlink directions "directionally" with respect to the base station to accomplish transmission and reception of antenna signals is achieved, thereby improving the overall signal coverage and throughput.

In one embodiment, the radiation surfaces of the N antennas face four directions, where N≥4. The processor 22 is further configured to configure a plurality of second transceiving antenna groups from the N antennas, wherein the second transceiving antenna group is made up by K antennas, and the K antennas of the second transceiving antenna group are provided with three radiation surfaces that are adjacent to each other sequentially and face different directions, where 3≤K≤N.

Exemplarily, in a case of N=4, the radiation surfaces of four antennas face four directions, the orientation of each radiation surface is different, and 360° omnidirectional coverage on the horizontal plane can be realized. It can be understood that each of the four antennas A1, A2, A3, A4 has a radiation surface, the antenna A1 has a radiation surface 1, the antenna A2 has a radiation surface 2, the antenna A3 has a radiation surface 3, the antenna A4 has a radiation surface 4, the four radiation surfaces are arranged in order, the orientations of the four radiation surfaces are different from each other, and 360° omnidirectional coverage of scanning beams on the horizontal plane can be realized.

The processor 22 may be configured to configure a plurality of second transceiving antenna groups from four antennas, wherein the second transceiving antenna group may be made up by three antennas, and the three antennas of the second transceiving antenna group are provided with three adjacent radiation surfaces that are adjacent to each other sequentially and face different directions. For example, the processor 22 may be configured to construct four second transceiving antenna groups, which may be second transceiving antenna group (A1, A2, A3), (A2, A3, A4), (A3, A4, A1), (A4, A1, A2).

In one embodiment, the processor 22 may be configured to control the RF circuit 242 so that the plurality of second transceiving antenna groups are sequentially in the operation state to receive the antenna signals. When each second transceiving antenna group is in the operation state, the RF circuit 242 can measure the network information of the antenna signals received by the second transceiving antenna group correspondingly, and the processor 22 can obtain a target second transceiving antenna group based on the network information of the antenna signals obtained by the plurality of second transceiving antenna groups and can thus configure the RF circuit 242 to control the target second transceiving antenna group to transmit and receive antenna signals.

In one embodiment, each antenna carries identification information used to indicate the radiation surface thereof. Specifically, the identification information is used to identify the radiation surface of each antenna. Exemplarily, at least one of numbers, letters and symbols may be used for the identification. The processor 22 may also be configured to obtain the identification information of each antenna in the target first transceiving antenna group; switch a target transceiving antenna group to the second transceiving antenna groups associated with the identification information according to the identification information; and determine a new target first transceiving antenna group based on the network information measured by the second transceiving antenna groups.

Exemplarily, when the target first transceiving antenna group is first transceiving antenna group (A1, A2), the second transceiving antenna groups associated with the identification information of the first transceiving antenna group (A1, A2) includes (A4, A1, A2) and (A1, A2, A3). That is, the antennas of the second transceiving antenna groups associated with the antennas in the first transceiving antenna group includes the same identification information as the antennas in the first transceiving antenna group. The processor 22 may be configured to switch the target first transceiving antenna group sequentially to the second transceiving antenna groups (A4, A1, A2) and (A1, A2, A3) and update to a new target first transceiving antenna group based on the network information measured by the second transceiving antenna groups (A4, A1, A2) and (A1, A2, A3). Exemplarily, if the network information measured based on the second transceiving antenna group (A4, A1, A2) is more significant than the network information based on the second transceiving antenna group (A1, A2, A3), the second transceiving antenna group (A4, A1, A2) serves as the target second transceiving antenna group.

In this embodiment, the target first transceiving antenna group can be updated based on the configured second transceiving antenna groups, that is, the RF circuit 242 can be configured to control the target second transceiving antenna group to "fit" uplink and downlink directions "directionally" with respect to the base station to accomplish transmission and reception of antenna signals, thereby improving the overall signal coverage and throughput.

In one embodiment, the processor 22 is further configured to configure a plurality of third transceiving antenna groups from the N antennas, wherein the radiation surfaces of J antennas of the third transceiving antenna group face different directions, wherein the radiation surfaces of the J and N antennas have a same number of orientations.

Exemplarily, in a case of N=4, the third transceiving antenna group is made up by four antennas, the four antennas of the third transceiving antenna group have four radiation surfaces that are adjacent to each other sequentially and face different directions, that is, the orientations of the radiation surfaces of the four antennas are different from each other. When N=4, the processor 22 configures one third transceiving antenna group from the four antennas.

The processor 22 is further configured to select a reference access antenna group according to the third transceiving antenna group; according to a third preset switch strategy, control the RF circuit 242 to control the plurality of transceiving antenna groups to be sequentially in the operation state based on an order the reference access antenna group switches to each first transceiving antenna group, such that the network information corresponding to the plurality of first transceiving antenna groups measured based on the RF circuit 242 can be obtained. The third preset switch strategy includes an alternate switch between the reference access antenna group and the first transceiving antenna group, and the reference access antenna group serves as an initial transceiving antenna group.

Exemplarily, in a case of N=4, the first transceiving antenna group may be first transceiving antenna group (A1, A2), (A2, A3), (A3, A4), (A4, A1), and the third transceiving antenna group is (A1, A2, A3, A4). The processor 22 may be further configured to use the third transceiving antenna group as an initial transceiving antenna group to receive wireless signals and perform a switch according to the third preset switch strategy. The RF circuit 242 can be configured to control the plurality of transceiving antenna groups to be in the operation state based on the following order: the third transceiving antenna group (A1, A2, A3, A4) → the first transceiving antenna group (A1, A2) → the third transceiving antenna group (A1, A2, A3, A4) → the first transceiving antenna group (A2, A3) → the third transceiving antenna group (A1, A2, A3, A4) → the first transceiving antenna group (A3, A4) → the third transceiving antenna group (A1, A2, A3, A4) → the first transceiving antenna group (A4, A1).

In this embodiment, when two first transceiving antenna groups are switched, they will all be relayed by the third transceiving antenna group (A1, A2, A3, A4). This can improve the efficiency of searching for antenna signals during the switching. With the advent of 5G era, the customer premise equipment 10 supports both the traditional 2G/3G/4G network and the 5G NR network (including NSA and SA solutions). When the customer premise equipment 10 supports 5G communication, 4*4 MIMO technology is usually adopted to realize antenna beamforming, and eventually the 4*4 MIMO technology obtains the best performance of downlink data transmission. When the customer premise equipment 10 supports 4*4 MIMO, the processor 22 may be configured to select four antennas from the N antennas to construct a plurality of first transceiving antenna groups.

In one embodiment, the customer premise equipment 10 may include eight antennas, and the eight antennas may include NR directional antennas and/or NR non-directional antennas. The eight antennas can be used to transmit and receive 5G signals at Sub-6G frequency band. In the embodiments of the present application, the customer premise equipment may mark the eight antennas as A1, A2, A3, A4, A5, A6, A7 and A8, respectively.

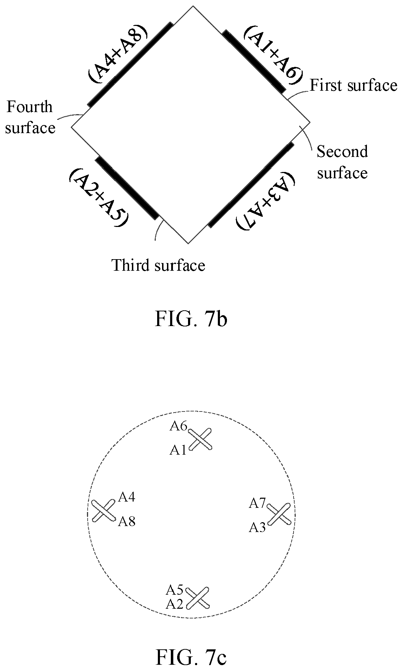

As shown in FIGs. 7a-7c, in one embodiment, the eight antennas include four paired antenna groups, which can be denoted as antenna group 1, antenna group 2, antenna group 3 and antenna group 4, respectively. The four antenna groups are distributed at intervals on four surfaces around the periphery of the customer premise equipment, and two antennas of a same antenna group are distributed on a same surface. Exemplarily, the antenna group 1, the antenna group 2, the antenna group 3 and the antenna group 4 are sequentially arranged on a first surface, a second surface, a third surface and a fourth surface in a clockwise direction, respectively.

Specifically, antenna A1 and antenna A6 constitute the antenna group 1, are distributed on the first surface and both have radiation surface 1; antenna A2 and antenna A5 constitute the antenna group 2, are distributed on the second surface and both have radiation surface 2; antenna A3 and antenna A7 constitute the antenna group 3, are distributed on the third surface and both have radiation surface 3; antenna A4 and antenna A8 constitute the antenna group 4, are distributed on the fourth surface and both have radiation surface 4.

In one embodiment, any two adjacent ones of the radiation surface of the antenna group 1, the radiation surface of the antenna group 3, the radiation surface of the antenna group 2 and the radiation surface of the antenna group 4 form an acute angle or a right angle. The radiation surface can be understood as a plane on which a radiation patch of the antenna faces outward, and the antenna receives electromagnetic signals from this plane. As shown in FIG. 7a, the radiation surfaces of the antenna group 1 and the antenna group 2 are arranged at an acute or right angle; the radiation surfaces of the antenna group 2 and the antenna group 3 are arranged at an acute or right angle; the radiation surfaces of the antenna group 3 and the antenna group 4 are arranged at an acute or right angle; the radiation surfaces of the antenna group 4 and the antenna group 1 are arranged at an acute or right angle. In this way, the range of beam scanning achieves 360° omnidirectional coverage on the horizontal plane.

In one embodiment, the antenna signals that can be transmitted and received by the eight antennas can be understood as 5G signals at Sub-6G frequency bands, that is, Sub-6G signals. The antennas A2, A4, A5, A8 can support n41, n77, n78, n79, B46, that is, 2.496GHz-6GHz is supported; the antennas A1, A3, A6, A7 can support n77, n78, n79, B46, that is, 3.3GHz-6GHz is supported.

In one embodiment, each antenna group includes 2 antennas, where one antenna is a +45° polarized antenna, and the other antenna is a -45° polarized antenna. The polarization directions of the antennas are orthogonal. This reduces intra-correlation between two antennas in a group. Exemplarily, the antennas A1, A2, A3, and A4 are all +45° polarized antennas, and the antennas A5, A6, A7, and A8 are all -45° polarized antennas.

Optionally, a group of antennas includes two antennas, where one antenna is a vertically-polarized antenna, and the other antenna is a horizontally-polarized antenna.

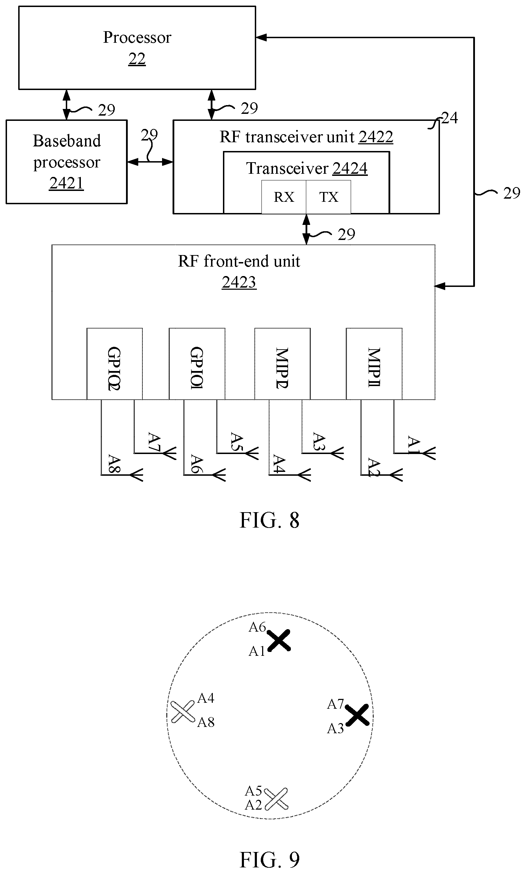

In one embodiment, as shown in FIG. 8, the RF front-end unit 2423 further includes 4 groups of antenna ports, which are denoted as antenna ports G1, G2, G3, and G4, respectively. The antenna port G1 is configured to be connected to the antennas A1 and A2; the antenna port G2 is configured to be connected to the antennas A3 and A4; the antenna port G3 is configured to be connected to the antennas A5 and A6; and the antenna port G4 is configured to be connected to the antennas A7 and A8. The antenna port can be a mobile industry processor interface (MIPI) and/or a general input/output (GPIO). Exemplarily, the antennas A1 and A2 are connected to a MIPI1 port, the antennas A3 and A4 are connected to a MIPI2 port, the antennas A5 and A6 are connected to a GPIO1 port, and the antennas A7 and A8 are connected to a GPIO2 port. It needs to be noted that two antennas on a same MIPI or GPIO cannot coexist at the same time.

When the RF path between a transceiving antenna group and the RF transceiver unit 2422 needs to be connected, the MIPI control unit can output clock and data signals to a corresponding pin connected to each antenna in the transceiving antenna group, and/or the GPIO control unit can output a high-level signal to a corresponding pin connected to each antenna in the transceiving antenna group.

The following embodiments are illustrated by taking N=8 as an example.

In one embodiment, the processor 22 may be configured to select four antennas from the eight antennas based on permutation and combination to form a plurality of first transceiving antenna groups. The first transceiving antenna group may include four antennas. As shown in FIG. 9, the four antennas of the first transceiving antenna group have two adjacent radiation surfaces facing different directions. It can also be understood that the first transceiving antenna group includes two sets of antenna groups, and the two sets of antenna groups are distributed on two adjacent surfaces. For example, four first transceiving antenna groups can be denoted as first transceiving antenna group (A1, A6, A3, A7), (A3, A7, A2, A5), (A2, A5, A4, A8), (A4, A8, A1, A6).

The processor 22 may configure the RF circuit 242 to control the MIPI control unit and/or the GPIO control unit to control each first transceiving antenna group to search for antenna signals. The customer premise equipment 10 adopts a 4-antennas (a selection of four antennas from a plurality of antennas) solution, that is, there are four transceiver antennas in the RF paths. This can realize "one transmitter four receivers (1T4R)" (i.e., there are one path for transmission and four paths for reception) and "two transmitters four receivers (2T4R)" (i.e., there are two paths for transmission and four paths for reception) in NSA and SA scenarios.

In one embodiment, the processor 22 may configure the RF circuit 242 to control the MIPI control unit and/or the GPIO control unit to control each first transceiving antenna group to search for antenna signals and measure the network information by each of the first transceiving antenna groups. Specifically, the RF circuit 242 may sequentially control the RF path between each transceiving antenna group and the RF transceiver unit 2422 to be connected, so that each first transceiving antenna group is in the operation state, and the RF circuit 242 can measure the network information of received antenna signals of each first transceiving antenna group correspondingly.

The processor 22 can obtain the network information corresponding to each first transceiving antenna group from the RF circuit 242 and can then determine a target first transceiving antenna group. The processor 22 configures the RF circuit 242 to control the target first transceiving antenna group to transmit and receive the antenna signals.

No matter where the base station is, the afore-mentioned customer premise equipment 10 can determine the target first transceiving antenna group (with optimal four antennas as transmitting/receiving antennas) in an intelligent way to realize dynamic determination on the best antenna transmission/reception direction for communicating with the base station to "fit" uplink and downlink directions "directionally" with respect to the base station to accomplish transmission and reception of 5G signals, thereby improving the overall signal coverage and throughput. Meanwhile, the advantages of high speed and high communication capacity of 4*4 MIMO technology are ensured, the antenna gain is improved, the coverage is increased, the energy consumption generated by other antennas with weak received signals in operation is avoided, and it is beneficial for heat dissipation of the system.

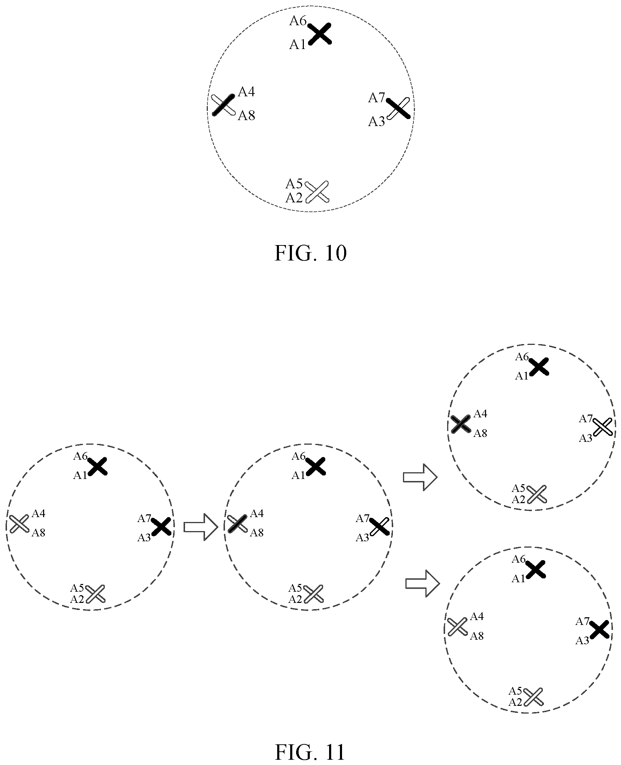

In one embodiment, the processor 22 may be configured to configure a plurality of second transceiving antenna groups from the eight antennas. The second transceiving antenna group consists of four antennas. As shown in FIG. 10, the four antennas in the second transceiving antenna group are distributed on three successively adjacent faces, and on a middle surface among the three successively adjacent faces a set of antennas are disposed. That is, two antennas are of a same antenna group (for example, antenna group 1, antenna group 2, antenna group 3, or antenna group 4) and are distributed on the middle surface. Two extra antennas are distributed on two surfaces adjacent to the middle surface, respectively. It can also be understood that the four antennas of the second transceiving antenna group have three radiation surfaces that are adjacent to each other sequentially and face different directions. The three radiation surfaces that are adjacent to each other sequentially include a first radiation surface, a second radiation surface and a third radiation surface, wherein among the four antennas the radiation surface of one antenna is the first radiation surface, the radiation surfaces of two antennas are the second radiation surface, and the radiation surface of one antenna is the third radiation surface. Exemplarily, the second transceiving antenna group may be second transceiving antenna group (A1, A6, A8, A3), (A4, A8, A2, A6), (A2, A5, A3, A8), (A3, A4, A2, A6), and so on.

In one embodiment, based on the plurality of configured second transceiving antenna groups, the processor 22 may control the RF circuit 242 to connect the RF paths of the plurality of second transceiving antenna groups so that the RF circuit 242 can measure the network information of antenna signals received by the plurality of second transceiving antenna groups. The processor 22 can determine a target second transceiving antenna group according to a plurality of pieces of network information measured by the RF circuit 242 and can further configure the RF circuit 242 to control the target second transceiving antenna group to be in the operation state to transmit and receive antenna signals.

In one embodiment, each antenna carries identification information used to indicate the radiation surface thereof. The antennas A1 and A6 have a radiation surface 1, the antennas A2 and A5 have a radiation surface 2, the antennas A3 and A7 have a radiation surface 3, and the antennas A4 and A8 have a radiation surface 4. Exemplarily, the radiation surfaces 1, 2, 3 and 4 can be marked with 001, 002, 003 and 004, respectively. It needs to be noted that the identification information of the radiation surface can also be represented by at least one of numbers, letters or symbols, and the identification information of the radiation surface is not further limited in this application.

Further, the antennas A1 and A2 are connected to a MIPI1 port, the antennas A3 and A4 are connected to a MIPI2 port, the antennas A5 and A6 are connected to a GPIO1 port, and the antennas A7 and A8 are connected to a GPIO2 port. The processor 22 may be configured to establish a mapping table between antenna ports and the radiation surfaces of the antennas and store the mapping table in the memory 21. When it needs to control the RF circuit 242 to switch to a different transceiving antenna group to receive antenna signals, the processor 22 can retrieve the mapping table from the memory and control the RF circuit 242 to connect the RF path of each transceiving antenna group according to the mapping table.

The processor 22 may configure the RF circuit 242 to obtain the identification information of each antenna in the target first transceiving antenna group; and according to the identification information, identify a plurality of second transceiving antenna groups for updating the target first transceiving antenna group. When the plurality of second transceiving antenna groups are determined, the RF circuit 242 can be controlled to connect the RF path of each second transceiving antenna group in turn and measure the network information corresponding to the plurality of second transceiving antenna groups. The processor 22 can obtain the network information corresponding to the plurality of second transceiving antenna groups from the RF The circuit 242 and determine a target second transceiving antenna group. The RF circuit 242 is controlled to use the target second transceiving antenna group as a new target transceiving antenna group to transmit and receive antenna signals.

Exemplarily, when the target first transceiving antenna group is first transceiving antenna group (A1, A6, A3, A7), the identification information 001, 001, 002, 002 of the antennas can be obtained correspondingly. Further, according to the identification information 001, the processor 22 may be configured to identify the plurality of second transceiving antenna groups (A4 or A8, A6, A1, A3 or A7) for updating the target transceiving antenna group; and according to the identification information 002, the processor 22 may be configured to identify the plurality of second transceiving antenna groups (A1 or A6, A3, A7, A2 or A5) for updating the target first transceiving antenna group. Two antennas in the identified second transceiving antenna group have to have the radiation surface 1 with the identification information 001, and the radiation surface 1 is the second radiation surface in the second transceiving antenna group. Correspondingly, two antennas in the identified second transceiving antenna group have to have the radiation surface 2 with the identification information 002, and the radiation surface 2 is the second radiation surface in the second transceiving antenna group. Based on the RF circuit 242, the network information measured by the plurality of second transceiving antenna groups can be measured correspondingly. The processor 220 can obtain the network information with maximum value based on the network information of antenna signals measured corresponding to each second transceiving antenna group, take the second transceiving antenna group corresponding to the network information with the maximum value as the new target first transceiving antenna group, and configure the RF circuit 242 to control the RF path of the new target first transceiving antenna group to be connected, so that the new target first transceiving antenna group is used to transmit and receive antenna signals.

In this embodiment, the customer premise equipment 10 can accurately determine the target first transceiving antenna group to realize dynamic determination on the best antenna transmission/reception direction for communicating with the base station to "fit" uplink and downlink directions "directionally" with respect to the base station to accomplish transmission and reception of 5G signals, thereby improving the overall signal coverage and throughput. Meanwhile, the advantages of high speed and high communication capacity of 4*4 MIMO technology are ensured, the antenna gain is improved, the coverage is increased, and energy consumption generated by other antennas with weak received signals in operation is avoided.

In one embodiment, polarization directions of two antennas (in a same antenna group) with radiation surfaces facing a same direction are different. Specifically, one antenna is a +45° polarized antenna, and the other antenna is a -45° polarized antenna. The polarization directions of the antennas are orthogonal. This reduces intra-correlation between two antennas in a group. Exemplarily, the antennas A1, A2, A3, and A4 are all +45° polarized antennas, and the antennas A5, A6, A7, and A8 are all -45° polarized antennas.

In one embodiment, when the processor 22 obtains the target second transceiving antenna group, the processor 22 is further configured to further obtain the polarization direction and the identification information of each antenna in the target second transceiving antenna group. The processor 22 is further configured to determine to-be-switched first antenna and second antenna in the target second transceiving antenna group according to the identification information, and switch the first antenna to a third antenna with the same identification information as the first antenna and a polarization direction different from the first antenna, and switch the second antenna to a fourth antenna with the same identification information as the second antenna and a polarization direction different from the second antenna. Exemplarily, if the target second transceiving antenna group is second transceiving antenna group (A4, A6, A1, A7), it can be determined the identification information of the to-be-switched first antenna in the target second transceiving antenna group is 004 and the identification information of the to-be-switched second antenna is 002, according to the identification information 004, 001, 001 and 002. Therefore, the first antenna A4 and the second antenna A7 can be determined. The first antenna A4 of the target second transceiving antenna group can be switched to a third antenna A8 with the same identification information as the first antenna A4 and a polarization direction different from the first antenna A4, and the second antenna A7 can be switched to a fourth antenna A3 with the same identification information as the second antenna A7 and a polarization direction different from the second antenna A7, thereby constructing a second transceiving antenna group (A8, A6, A1, A3). The RF circuit 242 can switch the target second transceiving antenna group to the second transceiving antenna group (A8, A6, A1, A3) configured by the processor and measure the network information of antenna signals received by the second transceiving antenna group (A8, A6, A1, A3) correspondingly. The processor 22 can obtain two pieces of network information corresponding to the target second transceiving antenna group (A4, A6, A1, A7) and the second transceiving antenna group (A8, A6, A1, A3) and compare them, and take the second transceiving antenna group corresponding to more significant network information as a new target second transceiving antenna group. In this embodiment, the target second transceiving antenna group can be calibrated and updated, and the antenna gain can be further improved.

In one embodiment, the processor 22 may be further configured to establish a first preset switch strategy according to the identification information of each antenna in the first transceiving antenna groups and the second transceiving antenna groups. The first preset switch strategy includes an alternative switch between the first transceiving antenna group and the second transceiving antenna group. Specifically, the first preset switch strategy may be conducted based on the following order: the first transceiving antenna group → the second transceiving antenna group → the first transceiving antenna group → ... → the second transceiving antenna group, to achieve the control of switching among a plurality of transceiving antenna groups. Among the first transceiving antenna group and second transceiving antenna group with a switching performed therebetween, there are two antennas with the same identification information.

It needs to be noted that a plurality of switching paths for alternative switching between the first transceiving antenna group and the second transceiving antenna group are included in the first preset switch strategy.

The processor 22 is configured to obtain the identification information of the radiation surface thereof in the first transceiving antenna group that is currently in the operation state. Exemplarily, if the current first transceiving antenna group is first transceiving antenna group (A1, A6, A3, A7), a corresponding first preset switch strategy is the first transceiving antenna group (A1, A6, A3, A7) → the first transceiving antenna group (A4 or A8, A6, A1, A3 or A7) → the first transceiving antenna group (A1, A6, A4, A8) or the first transceiving antenna group (A3, A7, A2, A5) → the second transceiving antenna group.

As shown in FIG. 11, if the current first transceiving antenna group is first transceiving antenna group (A1, A6, A3, A7), a corresponding first preset switch strategy is the first transceiving antenna group (A1, A6, A3, A7) → the second transceiving antenna group (A4, A6, A1, A7).

The processor 22 may be configured to obtain the network information measured based on the first transceiving antenna group (A1, A6, A3, A7) and the second transceiving antenna group (A4, A6, A1, A7) to select a next switching path for the transceiving antenna group. If the network information measured based on the first transceiving antenna group (A1, A6, A3, A7) is more significant than the network information measured based on the second transceiving antenna group (A4, A6, A1, A7), a switching is performed from the second transceiving antenna group (A4, A6, A1, A7) to the first transceiving antenna group (A3, A7, A2, A5). Otherwise, a switching is performed from the second transceiving antenna group (A4, A6, A1, A7) to the first transceiving antenna group (A1, A6, A4, A8).

The processor 22 is further configured to control the RF circuit 242 to control a plurality of transceiving antenna groups to be in the operation state sequentially and measure the network information of antenna signals received by each transceiving antenna group, according to the first preset switch strategy. The processor 22 may obtain the network information of antenna signals measured by the plurality of first transceiving antenna groups and the plurality of second transceiving antenna groups, and configure the RF circuit to update the target first transceiving antenna group according to a plurality of pieces of measured network information. In this embodiment, the target first transceiving antenna group may be the first transceiving antenna group or the second transceiving antenna group.

In this embodiment, the customer premise equipment can switch from the first transceiving antenna group to the second transceiving antenna group based on the first preset switch strategy. During the switching, a next transceiving antenna group may be selected from an optimal one of a plurality of switching paths of the first preset switch strategy. This can improve the efficiency of determining the target first transceiving antenna group.

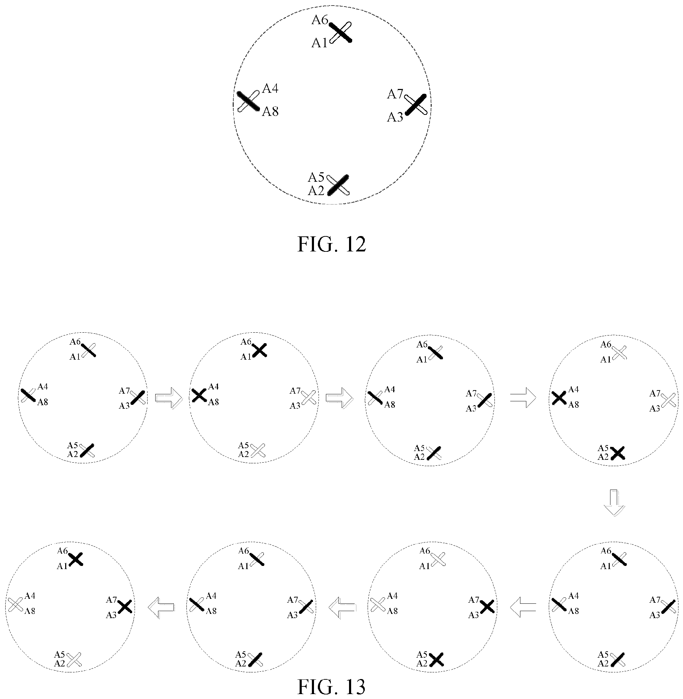

In one embodiment, the processor 22 is further configured to configure a plurality of third transceiving antenna groups from eight antennas, wherein the third transceiving antenna group is made up by four antennas. As shown in FIG. 12, one antenna of each of the four antenna groups may be selected to construct the third transceiving antenna group, and the radiation surfaces of the four antennas of the third transceiving antenna group face four different directions.

In one embodiment, the processor 22 is further configured to establish a second preset switch strategy according to the identification information of each antenna in the first transceiving antenna groups, the second transceiving antenna groups and the third transceiving antenna groups. The second preset switch strategy includes an alternative switch between the first transceiving antenna group, the second transceiving antenna group and the third transceiving antenna group.

The processor 22 is further configured to control the RF circuit 242 to control a plurality of transceiving antenna groups to be in the operation state sequentially and measure the network information of antenna signals received by each transceiving antenna group, according to the second preset switch strategy. The processor 22 may determine a target third transceiving antenna group based on the network information of the first transceiving antenna group, the second transceiving antenna group and the third transceiving antenna group correspondingly measured by the RF circuit 242. The target third transceiving antenna group is the first transceiving antenna group or the second transceiving antenna group. In this embodiment, the customer premise equipment can perform a switching between the transceiving antenna groups based on the second preset switch strategy, and this can improve the efficiency of determining the target third transceiving antenna group.

In one embodiment, the processor 22 may be further configured to select a reference access antenna group according to at least one third transceiving antenna group. When the customer premise equipment is powered on, the distribution of base stations and NR cells around the customer premise equipment is unknown. In order to enable the customer premise equipment to access a second network system with the greatest probability, the customer premise equipment may attempt to access using any third transceiving antenna group as a reference access antenna group. Exemplarily, the reference access antenna group may be a transceiving antenna group (A6, A8, A2, A3), a transceiving antenna group (A6, A4, A2, A7), a transceiving antenna group (A1, A8, A5, A3) and a transceiving antenna group (A1, A4, A5, A7). It needs to be noted that due to a limitation of n41 band, the last solution (A1, A4, A5, A7) is not used as the reference access antenna group.

The followings are illustrated by taking the third transceiving antenna group (A6, A8, A2, A3) as the reference access transceiving antenna group for example. The processor 22 may be further configured to control the RF circuit 242 to perform a switching from the reference access antenna group to each first transceiving antenna group according to the third preset switch strategy. The third preset switch strategy includes an alternate switch between the reference access antenna group and the first transceiving antenna group, and the reference access antenna group serves as an initial transceiving antenna group.

Exemplarily, when the third transceiving antenna group (A6, A8, A2, A3) is successfully connected, as shown in FIG. 13, a traversal switching path made according to the third preset switch strategy is listed as follows: the third transceiving antenna group (A6, A8, A2, A3) → the first transceiving antenna group (A1, A6, A4, A8) → the third transceiving antenna group (A6, A8, A2, A3) → the first transceiving antenna group (A2, A5, A4), A8) → the third transceiving antenna group (A6, A8, A2, A3) → the first transceiving antenna group (A2, A5, A3, A7) → the third transceiving antenna group (A6, A8, A2, A3) → the first transceiving antenna group (A3, A7, A1, A6).

When the RF circuit 242 controls a plurality of transceiving antenna groups to be sequentially in the operation state according to the third preset switch strategy, the RF circuit 242 may correspondingly measure the network information of antenna signals received by each transceiving antenna group, and the processor 22 may be further configured to determine the target first transceiving antenna group according to the measured network information of the plurality of first transceiving antenna groups measured by the RF circuit 242.

In this embodiment, the third transceiving antenna group can be taken as a reference access transceiving antenna group to access a 5G network system, and when a switching is performed between two first transceiving antenna groups, they will all be relayed by the third transceiving antenna group. This can avoid a disconnection from the network during the switching and ensure the stability of accessing the 5G network system.

In one embodiment, the processor 22 is further configured to control the RF circuit 242 to perform traversal switching from the reference access antenna group to a plurality of second transceiving antenna groups according to a fourth preset switch strategy. The processor 22 is further configured to control the RF circuit 242 to control a plurality of transceiving antenna groups to be in the operation state sequentially and measure the network information of antenna signals received by each transceiving antenna group, according to the fourth preset switch strategy. The processor 22 may identify a preselected access antenna group based on a plurality of pieces of network information measured by the RF circuit 242.

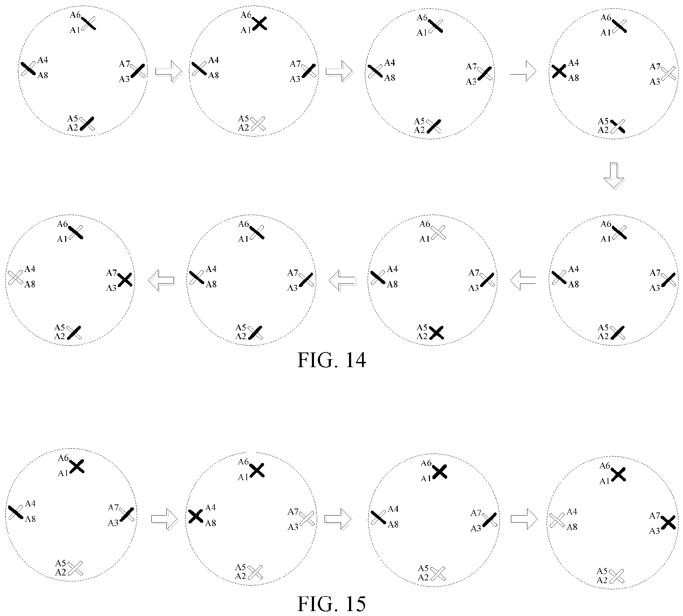

Exemplarily, the followings are illustrated by taking the third transceiving antenna group (A6, A8, A2, A3) as the reference access transceiving antenna group for example. When the third transceiving antenna group (A6, A8, A2, A3) is successfully connected, as shown in FIG. 14, a traversal switching path made according to the fourth preset switch strategy is listed as follows: the third transceiving antenna group (A6, A8, A2, A3) → the second transceiving antenna group (A1, A6, A8, A3) → the third transceiving antenna group (A6, A8, A2, A3) → the second transceiving antenna group (A6, A8, A4, A2) → the third transceiving antenna group (A6, A8, A2, A3) → the second transceiving antenna group (A8, A2, A5, A3) → the third transceiving antenna group (A6, A8, A2, A3) → the second transceiving antenna group (A6, A2, A3, A7). The processor 22 is further configured to correspondingly measure a plurality of pieces of network information based on the plurality of second transceiving antenna groups and take the second transceiving antenna group with maximum network information as the preselected access antenna group.

The processor 22 is further configured to determine a plurality of first transceiving antenna groups according to the preselected access antenna group and determine the target first transceiving antenna group based on a plurality of pieces of network information measured by the determined first transceiving antenna groups. Specifically, the processor 22 is further configured to obtain the identification information of each antenna in the preselected access antenna group, and determine a plurality of to-be-switched first transceiving antenna groups according to the identification information. The identification information of each of the to-be-switched first transceiving antenna groups is associated with the identification information of some antennas in the preselected access antenna group.

Exemplarily, when the preselected access antenna group is second transceiving antenna group (A1, A6, A8, A3), the identification 004, 001, 001, 002 of each antenna in the second transceiving antenna group (A1, A6, A8, A3) can be obtained correspondingly. According to the identification information, two to-be-switched first transceiving antenna groups (A4, A8, A1, A6) and (A1, A6, A3, A7) can be determined. Two antennas with the same identification information in the second transceiving antenna groups can be kept unchanged, the antenna with identification information 004 can be switched to the antenna with identification information 002 to construct the first transceiving antenna group (A1, A6, A3, A7). Alternatively, two antennas with the same identification information in the second transceiving antenna groups can be kept unchanged, and the antenna with identification information 002 can be switched to the antenna with identification information 004 to construct the first transceiving antenna group (A4, A8, A1, A6). The RF circuit 242 can control the preselected access antenna group to switch to the plurality of to-be-switched first transceiving antenna groups and correspondingly measure the network information of antenna signals received when the plurality of first transceiving antenna groups are in the operation state. The processor 22 may determine the target first transceiving antenna group based on a plurality of pieces of network information measured by the RF circuit 242.

When the processor 22 is further configured to determine a target transceiving antenna group based on the plurality of pieces of network information measured by the determined first transceiving antenna groups, the processor 22 may be configured to realize switching according to a switching path. As shown in FIG. 15, the switching path is the second transceiving antenna group (A1, A6, A8, A3) → the first transceiving antenna group (A4, A8, A1, A6) → the second transceiving antenna group (A1, A6, A8, A3) → the first transceiving antenna group (A1, A6, A3, A7). During the switching, the target first transceiving antenna group can be determined based on the network information measured by two first transceiving antenna groups.

In one embodiment, the processor 22 is further configured to establish a fifth preset switch strategy according to the identification information of each antenna in the second transceiving antenna groups. The fifth preset switch strategy includes an alternate switch between the reference access antenna group and the second transceiving antenna group. Specifically, the processor 22 is further configured to control the RF circuit 242 to perform a corresponding switching operation according to the fifth preset switch strategy, and during the switching of a plurality of transceiving antenna groups, the RF circuit 242 can obtain the network information measured based on a current transceiving antenna group and a previous transceiving antenna group, and then the fifth preset switch strategy may be updated, until a preselected access antenna group is determined.

A plurality of switching paths for alternate switches between the reference access antenna group and the second transceiving antenna groups are included in the fifth preset switch strategy. The switching paths are not directed to traversal switches to all the second transceiving antenna groups, but are directed to switches to part of the second transceiving antenna groups.

Exemplarily, the followings are illustrated by taking the third transceiving antenna group (A6, A8, A2, A3) as the reference access transceiving antenna group for example. When the third transceiving antenna group (A6, A8, A2, A3) is successfully connected, the network information Q1 can be measured correspondingly based on the third transceiving antenna group, a switch to the second transceiving antenna group (A4, A1, A6, A7) is performed according to the fifth preset switch strategy, and the network information Q2 can be measured correspondingly based on the second transceiving antenna group (A4, A1, A6, A7). The processor 22 may be configured to obtain the network information Q2 measured based on the current transceiving antenna group (the second transceiving antenna group (A4, A1, A6, A7)) and the network information Q1 measured based on the previous transceiving antenna group (the third transceiving antenna group (A6, A8, A2, A3)) to update the fifth preset switch strategy. If the network information Q2 is more significant than the network information Q1, the following path is continued: the second transceiving antenna group (A4, A1, A6, A7) → the third transceiving antenna group (A6, A8, A2, A3) → the second transceiving antenna group (A2, A4, A8, A6), and network information Q3 measured based on the second transceiving antenna group (A2, A4, A8, A6) is obtained. If the network information Q3 is more significant than the network information Q2, the second transceiving antenna group (A2, A4, A8, A6) is taken as the preselected access antenna group.

It needs to be noted that because the antenna signals radiated by NR cells are highly directional, the customer premise equipment 10 can take any third transceiving antenna group as the reference access antenna group for accessing the network. Whenever it switches to the second transceiving antenna group, it will switch back to the reference access antenna group, and the reference access antenna group is switched to another second transceiving antenna group once again, until each second transceiving antenna group has been gone through. During the switching, the customer premise equipment 10 will not disconnect from the network because of poor signal quality, by switching back to the reference access antenna group.

In one embodiment, the customer premise equipment 10 can work in an NSA networking mode, and can also work in a SA networking mode. The 3rd Generation Partnership Project (3GPP) defines two schemes for 5G New Radio (NR) networking, namely Standalone (SA) networking and Non-Standalone (NSA) networking. When the customer premise equipment 10 needs to perform 5G communication, the customer premise equipment 10 can connect to a cell with the ability of supporting the NSA networking or SA networking, and connect to an NR air interface according to different networking modes, so that the customer premise equipment 10 can enjoy 5G service.

When the customer premise equipment 10 works in the NSA networking mode, the processor 22 is further configured to receive a measurement instruction from the base station based on a first network system, where the measurement instruction at least contains time information configured by the base station and used for instructing the customer premise equipment 10 to measure antenna signals supported by a second network system. The first network system is a 4G network system, and the second network system is a 5G network system. According to the measurement instruction, a driving mechanism is controlled to drive a millimeter-wave antenna to rotate according to an interval stepping strategy.

Specifically, the processor 22 may be configured to actively initiate a procedure of accessing the first network system and control the customer premise equipment 10 to reside on the first network system. When the customer premise equipment 10 successfully resides on the first network system, the customer premise equipment 10 can receive the measurement instruction from the base station via the first network system. The measurement instruction at least contains the time information configured by the base station, a network access threshold for controlling residing of the customer premise equipment 10 on the second network system, and so on. The time information is indicative of a duration of the customer premise equipment 10 measuring the second network system. For example, the time information may be periodic information or aperiodic information of the customer premise equipment 10 measuring the second network system. When the customer premise equipment 10 performs two adjacent measurements, the period information is an interval between the start time of a first measurement and the start time of a second measurement, or an interval between the end time of the first measurement and the start time of the second measurement, or an interval between the end time of the first measurement and the end time of the second measurement.

The first network system and the second network system may correspond to corresponding frequency band ranges. For example, the first network system is the 4G network, and a network system corresponding to the first network system is a long term evolution (LTE) system. The second network system is the 5G network, and a network system corresponding to the second network system is the 5G NR system.

The measurement instruction is configured by the base station, and the base station can set different time information according to the density of the NR systems. For example, the time information may be 1 second, 5 seconds, 10 seconds, or other. For example, when the base station determines that the NR cells around the LTE cell where the customer premise equipment 10 locates are densely deployed, and the area where the customer premise equipment 10 locates is well covered by the NR systems, the base station can set the time information of the customer premise equipment 10 measuring the second network system to be relatively long, so as to reduce the power consumption of the customer premise equipment 10. When the base station determines that the NR cells around the LTE cell where the customer premise equipment 10 locates is relatively sparse, the base station can set the time information of the customer premise equipment 10 measuring the second network system to be relatively short, so as to ensure that the customer premise equipment 10 can timely detect whether the customer premise equipment 10 is covered by the second network system.

Optionally, when the network that the customer premise equipment 10 resides on is the first network system (4G network) and the second network system is the 5G network, the first network system (LTE system) supports the NSA function, that is, supports a combination networking of the first network system and the second network system (NR system).

Specifically, the processor 22 is configured to control the plurality of first transceiving antenna groups to be in operation state to correspondingly measure the network information of the antenna signals according to the measurement instruction. The customer premise equipment 10 can periodically perform the measurement of the network information of the antenna signals according to the measurement instruction configured by the base station, which can avoid increment of power consumption of the customer premise equipment 10 caused by real-time and continuous measurement of the network information of the antenna signals.

The afore-described embodiments only express some implementation modes of the present application, and relatively specific and detailed descriptions are made thereto but should not thus be understood as limiting the scope of the application. It is to be pointed out that those of ordinary skill in the art may further make a plurality of transformations and improvements without departing from the concept of the present application and all of them fall within the scope of protection of the present application. Therefore, the scope of protection of the present application shall be subject to the scope of protection in the claims.

## Claims

1. A customer premise equipment, comprising:

   N antennas, provided at intervals around a periphery of the customer premise equipment, radiation surfaces of the N antennas facing at least three different directions;
   a radio frequency (RF) circuit, connected to the N antennas and configured to control the antennas to transmit and receive antenna signals and to correspondingly measure network information of the antenna signals; and
   a processor, connected to the RF circuit and configured to:

      configure a plurality of first transceiving antenna groups from the N antennas, wherein the first transceiving antenna group is made up by M antennas, and the M antennas of the first transceiving antenna group are provided with two adjacent radiation surfaces facing different directions, where $2 \leq M < N$ and $N \geq 3$;
      obtain the network information of the antenna signals correspondingly measured based on the plurality of first transceiving antenna groups;
      determine a target first transceiving antenna group based on maximum network information among a plurality of pieces of the measured network information; and
      configure the RF circuit to control the target first antenna group to transmit and receive the antenna signals.

**2.** The customer premise equipment of claim 1, wherein the processor is further configured to:

configure a plurality of second transceiving antenna groups from the N antennas, wherein the second transceiving antenna group is made up by K antennas, and the K antennas of the second transceiving antenna group are provided with three radiation surfaces that are adjacent to each other sequentially and face different directions, where $3 \leq K \leq N$;

obtain a target second transceiving antenna group based on the network information obtained by the plurality of second transceiving antenna groups; and

configure the RF circuit to control the target second antenna group to transmit and receive the antenna signals.

**3.** The customer premise equipment of claim 2, wherein each antenna carries identification information used to indicate the radiation surface thereof, and the processor is further configured to:

obtain the identification information of each antenna in the target first transceiving antenna group;

identify the plurality of second transceiving antenna groups according to the identification information; and

configure the RF circuit to update the target first transceiving antenna group based on the network information measured by the plurality of second transceiving antenna groups.

**4.** The customer premise equipment of claim 2, wherein the three radiation surfaces that are adjacent to each other sequentially comprise a first radiation surface, a second radiation surface and a third radiation surface, wherein among the K antennas, the radiation surface of at least one antenna is the first radiation surface, the radiation surfaces of at least two antennas are the second radiation surface, the radiation surface of at least one antenna is the third radiation surface, and $K \geq 4$.

**5.** The customer premise equipment of claim 2, wherein N is equal to eight, eight antennas are evenly distributed at intervals on four surfaces around the periphery of the customer premise equipment, and the radiation surfaces of every two antennas face a same direction, wherein the processor is further configured to:

configure the RF circuit to obtain identification information of each antenna in the target first transceiving antenna group;

select the plurality of second transceiving antenna groups used to update the target first transceiving antenna group, according to the identification information;

control the RF circuit to sequentially connect RF path of each of the second transceiving antenna groups and measure the network information corresponding to the plurality of the second transceiving antenna groups; and

determine the target second transceiving antenna group according to the network information corresponding to the plurality of second transceiving antenna groups.

**6.** The customer premise equipment of claim 5, wherein the radiation surfaces of every two antennas face a same direction, two antennas with the radiation surfaces facing a same direction have different polarization directions, each antenna carries identification information used to indicate the radiation surface thereof, the first transceiving antenna group and the second transceiving antenna group each comprises four antennas, and the processor is further configured to:

obtain the identification information and the polarization direction of each antenna in the target second transceiving antenna group;

determine to-be-switched first antenna and second antenna in the target second transceiving antenna group according to the identification information;

switch the first antenna to a third antenna with the same identification information as the first antenna and a polarization direction different from the first antenna and switch the second antenna to a fourth antenna with the same identification information as the second antenna and a polarization direction different from the second antenna.

**7.** The customer premise equipment of claim 2, wherein N is equal to eight, eight antennas are evenly distributed at intervals on four surfaces around the periphery of the customer premise equipment, every two antennas has a radiation surface facing a same direction and two antennas are comprised on the radiation surface, each antenna carries identification information used to indicate the radiation surface thereof, the first transceiving antenna group, the second transceiving antenna group and the target transceiving antenna group each comprises four antennas, and the processor is further configured to:

establish a first preset switch strategy according to the identification information of each antenna in the first transceiving antenna groups and the second transceiving antenna groups, wherein the first preset switch strategy comprises an alternate switch between the first transceiving antenna group and the second transceiving antenna group;

obtain the identification information of each antenna in the current first transceiving antenna group; and execute the first preset switch strategy according to the identification information, and obtain the network information measured corresponding to the plurality of first transceiving antenna groups and the plurality of second transceiving antenna groups to update the target first transceiving antenna group.

8. The customer premise equipment of claim 2, wherein among the first transceiving antenna group and the second transceiving antenna group with a switching performed therebetween, two antennas have the same identification information.

9. The customer premise equipment of claim 2, wherein N is equal to eight, eight antennas are evenly distributed at intervals on four surfaces around the periphery of the customer premise equipment, every two antennas have a radiation surface facing a same direction and two antennas are comprised on the radiation surface, each antenna carries identification information used to indicate the radiation surface thereof, and the processor is further configured to:

configure a plurality of third transceiving antenna groups from the eight antennas, wherein the third transceiving antenna group comprises four antennas, and the radiation surfaces of the four antennas face different directions; establish a second preset switch strategy according to the identification information of each antenna in the first transceiving antenna groups, the second transceiving antenna groups and the third transceiving antenna groups, wherein the second preset switch strategy at least comprises a sequential switch in an order of the first transceiving antenna group, the second transceiving antenna group and the third transceiving antenna group; execute the second preset switch strategy, and obtain the identification information of the antenna signals measured corresponding to the first transceiving antenna group, the second transceiving antenna group and the third transceiving antenna group to determine a target third transceiving antenna group; and configure the RF circuit to control the target third antenna group to transmit and receive the antenna signals.

10. The customer premise equipment of claim 1, wherein the radiation surfaces of the N antennas face four different directions, and the processor is further configured to:

configure a plurality of third transceiving antenna groups from the N antennas, wherein the radiation surfaces of J antennas of the third transceiving antenna group face different directions, wherein J is equal to the number of orientations of the radiation surfaces of the N antennas; select a reference access antenna group according to at least one third transceiving antenna group; and switch the reference access antenna group to each first transceiving antenna group to obtain the network information of the antenna signals measured corresponding to the plurality of first transceiving antenna groups, according to a third preset switch strategy, wherein the third preset switch strategy comprises an alternate switch between the reference access antenna group and the first transceiving antenna group, and the reference access antenna group serves as an initial transceiving antenna group.

11. The customer premise equipment of claim 10, wherein N is equal to eight, eight antennas are evenly distributed at intervals on four surfaces around the periphery of the customer premise equipment, the radiation surfaces of every two antennas face a same direction, the third transceiving antenna group comprises four antennas, and the processor is further configured to:

configure a plurality of second transceiving antenna groups from the eight antennas, wherein four antennas of the second transceiving antenna group has a first radiation surface, a second radiation surface and a third radiation surface that are adjacent to each other sequentially and face different directions, wherein among the four antennas, the radiation surface of one antenna is the first radiation surface, the radiation surfaces of two antennas are the second radiation surface, and the radiation surface of one antenna is the third radiation surface; select the reference access antenna group according to the plurality of third transceiving antenna groups; and perform traversal switching from the reference access antenna group to the plurality of second transceiving antenna groups according to a fourth preset switch strategy, and obtain the network information measured corresponding to the plurality of second transceiving antenna groups to identify a preselected access antenna group;

determine the plurality of first transceiving antenna groups according to the preselected access antenna group; and

determine the target first transceiving antenna group based on a plurality of pieces of network information measured by the plurality of determined first transceiving antenna groups.

12. The customer premise equipment of claim 11, wherein each antenna carries identification information used to indicate the radiation surface thereof, and the processor is further configured to:

configure four second transceiving antenna groups from the eight antennas;

establish a fifth preset switch strategy according to the identification information of each antenna in the second transceiving antenna groups, wherein the fifth preset switch strategy comprises an alternate switch between the reference access antenna group and the second transceiving antenna group;

obtain the network information measured based on a current transceiving antenna group and a previous transceiving antenna group to update the fifth preset switch strategy, until the preselected access antenna group is determined; and

determine the target first transceiving antenna group according to the preselected access antenna group.

13. The customer premise equipment of claim 11 or 12, wherein each antenna carries identification information used to indicate the radiation surface thereof, and the processor is further configured to:

obtain the identification information of each antenna in the preselected access antenna group; and

determine a plurality of to-be-switched first transceiving antenna groups according to the identification information, wherein the identification information of each antenna of each to-be-switched first transceiving antenna group is associated with the identification information of some antennas in the preselected access antenna group.

14. The customer premise equipment of claim 1, wherein the customer premise equipment further comprises 4 groups of antenna ports, which are denoted as antenna ports G1, G2, G3 and G4, respectively, and the N antennas are denoted as antenna A1, A2, A3, A4, A5, A6, A7 and A8, respectively, wherein the radiation surfaces of the antennas A1 and A6 face a same direction, the radiation surfaces of the antennas A2 and A5 face a same direction, the radiation surfaces of the antennas A3 and A7 face a same direction, and the radiation surfaces of the antennas A4 and A8 face a same direction, wherein:

the antenna port G1 is configured to be connected to the antennas A1 and A2;
the antenna port G2 is configured to be connected to the antennas A3 and A4;
the antenna port G3 is configured to be connected to the antennas A5 and A6; and
the antenna port G4 is configured to be connected to the antennas A7 and A8.

15. A customer premise equipment, comprising:

eight antennas, comprising four paired antenna groups, the four antenna groups being distributed at intervals on four surfaces around a periphery of the customer premise equipment, and two antennas of a same antenna group being distributed on a same surface;

a radio frequency (RF) circuit, connected to the eight antennas and configured to control the antennas to transmit and receive antenna signals and to correspondingly measure network information of the antenna signals; and

a processor, connected to the RF circuit and configured to:

configure a plurality of first transceiving antenna groups from the eight antennas, wherein the first transceiving antenna group is made up by four antennas, and the four antennas are evenly distributed on two adjacent surfaces;

obtain the network information of the antenna signals correspondingly measured based on the plurality of first transceiving antenna groups;

determine a target first transceiving antenna group based on maximum network information among a plurality of pieces of the measured network information; and

control the target first antenna group to transmit and receive the antenna signals.

16. The customer premise equipment of claim 15, wherein the processor is further configured to:

configure a plurality of second transceiving antenna groups from the eight antennas, wherein the second transceiving antenna group comprises four antennas, the four antennas of the second transceiving antenna group are provided on three surfaces that are adjacent to each other sequentially, and a middle one of the three surfaces that are adjacent to each other sequentially is provided with a group of antennas;

obtain the network information of the antenna signals based on the plurality of second transceiving antenna groups to obtain the target second transceiving antenna group; and

configure the RF circuit to control the target second antenna group to transmit and receive the antenna signals.

17. The customer premise equipment of claim 16, wherein each antenna carries identification information used to indicate the radiation surface thereof, and the processor is further configured to:

obtain the identification information of each antenna in the target first transceiving antenna group;

identify the plurality of second transceiving antenna groups according to the identification information; and

configure the RF circuit to update the target first transceiving antenna group based on the network information measured by the plurality of identified second transceiving antenna groups.

18. The customer premise equipment of claim 17, wherein two antennas of a same group have different polarization directions, and the processor is further configured to:

obtain the identification information and the polarization direction of each antenna in the target second transceiving antenna group;

determine to-be-switched first antenna and second antenna in the target second transceiving antenna group according to the identification information; and

switch the first antenna to a third antenna with the same identification information as the first antenna and a polarization direction different from the first antenna and switch the second antenna to a fourth antenna with the same identification information as the second antenna and a polarization direction different from the second antenna.

19. The customer premise equipment of claim 16, wherein each antenna carries identification information used to indicate the radiation surface thereof, and the processor is further configured to:

establish a first preset switch strategy according to the identification information of each antenna in the first transceiving antenna groups and the second transceiving antenna groups, wherein the first preset switch strategy comprises an alternate switch between the first transceiving antenna group and the second transceiving antenna group;

obtain the identification information of each antenna in the current first transceiving antenna group; and

execute the first preset switch strategy according to the identification information, and obtain the network information of the antenna signals measured corresponding to the plurality of first transceiving antenna groups and the plurality of second transceiving antenna groups to update the target first transceiving antenna group.

20. The customer premise equipment of claim 19, wherein among the first transceiving antenna group and the second transceiving antenna group with a switching performed therebetween, two antennas have the same identification information.

21. The customer premise equipment of claim 16, wherein each antenna carries identification information used to indicate the radiation surface thereof, and the processor is further configured to:

configure a plurality of third transceiving antenna groups from the eight antennas, wherein the third transceiving antenna group comprises four antennas, and the four antennas of the third transceiving antenna group are distributed on four surfaces;

establish a second preset switch strategy according to the identification information of each antenna in the first transceiving antenna groups, the second transceiving antenna groups and the third transceiving antenna groups, wherein the second preset switch strategy at least comprises a sequential switch in an order of the first transceiving antenna group, the second transceiving antenna group and the third transceiving antenna group;

execute the second preset switch strategy, and obtain the identification information of the antenna signals measured corresponding to the first transceiving antenna group, the second transceiving antenna group and the third transceiving antenna group to determine a target third transceiving antenna group.

22. The customer premise equipment of claim 15, wherein the processor is further configured to:

configure a plurality of third transceiving antenna groups from the eight antennas, wherein the third transceiving antenna group comprises four antennas, and the four antennas of the third transceiving antenna group are distributed on four surfaces;

select a reference access antenna group according to at least one third transceiving antenna group; and

switch the reference access antenna group to each first transceiving antenna group to obtain the network information of the antenna signals measured corresponding to the plurality of first transceiving antenna groups, according to a third preset switch strategy, wherein the third preset switch strategy comprises an alternate switch between the reference access antenna group and the first transceiving antenna group, and the reference access antenna group serves as an initial transceiving antenna group.

23. The customer premise equipment of claim 22, wherein the processor is further configured to:

configure a plurality of second transceiving antenna groups from the eight antennas, wherein four antennas of the second transceiving antenna group are provided on three surfaces that are adjacent to each other sequentially, and a middle one of the three surfaces that are adjacent to each other sequentially is provided with a group of antennas;

select the reference access antenna group according to the plurality of third transceiving antenna groups; and

perform traversal switching to switch to the plurality of second transceiving antenna groups according to a fourth preset switch strategy, and obtain the network information measured corresponding to the plurality of second transceiving antenna groups to identify a preselected access antenna group;

determine the plurality of first transceiving antenna groups based on the network information measured corresponding to the preselected access antenna group; and

determine the target first transceiving antenna group based on a plurality of pieces of network information measured by the plurality of determined first transceiving antenna groups.

24. The customer premise equipment of claim 23, wherein each antenna carries identification information used to indicate the radiation surface thereof, and the processor is further configured to:

configure four second transceiving antenna groups from the eight antennas;

establish a fifth preset switch strategy according to the identification information of each antenna in the second transceiving antenna groups, wherein the fifth preset switch strategy comprises an alternate switch between the reference access antenna group and the second transceiving antenna group; and

obtain the network information measured based on a current transceiving antenna group and a previous transceiving antenna group to update the fifth preset switch strategy, until the preselected access antenna group is determined.

25. The customer premise equipment of claim 23 or 24, wherein each antenna carries identification information used to indicate the radiation surface thereof, and the processor is further configured to:

obtain the identification information of each antenna in the preselected access antenna group; and

determine a plurality of to-be-switched first transceiving antenna groups according to the identification information, wherein the identification information of each antenna in each to-be-switched first transceiving antenna group is associated with the identification information of some antennas in the preselected access antenna group.

26. The customer premise equipment of claim 15, wherein the customer premise equipment works in a Non-Standalone (NSA) networking mode, and the processor is further configured to:

receive a measurement instruction transmitted from a base station based on a first network system, wherein the measurement instruction at least contains time information configured by the base station and used for instructing the customer premise equipment to measure antenna signals supported by a second network system;

actively initiate a procedure of accessing the first network system and control the customer premise equipment to reside on the first network system;

receive the measurement instruction transmitted from the base station via the first network system; and

control the plurality of first transceiving antenna groups to be in an operation state to measure the network information of the antenna signals according to the measurement instruction.

FIG. 1

FIG. 2

Memory 21

| Operation System 211 |
| Communication module 212 |
| GPS module 213 |

29

Processor 22

29

Peripheral interface 23

29

RF system 24

| RF circuit 242 |
| RF circuit 242 |
| RF circuit 242 |
| RF circuit 242 |
| Antenna 241 |

29

I/O subsystem 26

| Button 261 |
| Light indicator |
| Other I/O ports |

Customer Premise
Equipment 10

FIG. 3

Processor
22

242

Baseband
processor
2421

29

29

RF transceiver unit 2422

Transceiver 2424

RX | TX

29

29

RF front-end unit 2423

29

241

FIG. 4

Radiation surface 1 | Radiation surface 2

A1

A2

A3

Radiation surface 3

FIG. 5

Radiation surface 1

A1

Radiation surface 2

A4

A3

Radiation surface 4

A2

Radiation surface 3

FIG. 6

Antenna group 4
(A4+A8)

Antenna group 1
(A1+A6)

Antenna group 2
(A2+A5)

Antenna group 3
(A3+A7)

FIG. 7a

(A4+A8)    (A1+A6)

Fourth
surface

First surface

Second
surface

(A2+A5)    (A3+A7)

Third surface

FIG. 7b

A6
A1

A4
A8

A7
A3

A5
A2

FIG. 7c

FIG. 8

FIG. 9

FIG. 10

FIG. 11

FIG. 12

FIG. 13

FIG. 14

FIG. 15

<table>
<tr><td colspan="2" align="center">**INTERNATIONAL SEARCH REPORT**</td><td>International application No.<br>**PCT/CN2021/071747**</td></tr>
</table>

**A. CLASSIFICATION OF SUBJECT MATTER**

H04B 7/06(2006.01)i; H04B 7/08(2006.01)i; H04B 1/401(2015.01)i; H01Q 21/00(2006.01)i

According to International Patent Classification (IPC) or to both national classification and IPC

**B. FIELDS SEARCHED**

Minimum documentation searched (classification system followed by classification symbols)

H04B H01Q

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT: 天线, 分组, 群组, 组, 方向, 朝向, 不同, 交替, 轮流, 轮换, 标识, 八, 8, 相邻, 临近, antenna?, group?, set?, direction?, orientat+, differen+, in turn, alternat+, identifier, ID, eight, adjacent, adjoin+

**C. DOCUMENTS CONSIDERED TO BE RELEVANT**

| Category* | Citation of document, with indication, where appropriate, of the relevant passages | Relevant to claim No. |
|---|---|---|
| PX | CN 111277309 A (GUANGDONG OPPO MOBILE TELECOMMUNICATIONS CORP., LTD.) 12 June 2020 (2020-06-12)<br>claims 1-22, description paragraphs 41-150 | 1-26 |
| Y | CN 109428177 A (ZTE CORPORATION) 05 March 2019 (2019-03-05)<br>description, paragraphs 44-90, figure 5 | 1, 14, 15, 26 |
| Y | CN 102122976 A (ALCATEL-LUCENT SHANGHAI BELL CO., LTD.) 13 July 2011 (2011-07-13)<br>description paragraphs 27, 39-41 | 1, 14, 15, 26 |
| A | CN 106712800 A (GUANGDONG OPPO MOBILE TELECOMMUNICATIONS CORP., LTD.) 24 May 2017 (2017-05-24)<br>entire document | 1-26 |
| A | CN 103887613 A (GUANGZHOU HAIGE COMMUNICATIONS GROUP INCORPORATED COMPANY) 25 June 2014 (2014-06-25)<br>entire document | 1-26 |
| A | US 2015256213 A1 (WISTRON NEWEB CORP.) 10 September 2015 (2015-09-10)<br>entire document | 1-26 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 April 2021** | **12 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/071747**

**C.     DOCUMENTS CONSIDERED TO BE RELEVANT**

| Category* | Citation of document, with indication, where appropriate, of the relevant passages | Relevant to claim No. |
|-----------|---|---|
| A | US 2019386399 A1 (WISTRON NEWEB CORP.) 19 December 2019 (2019-12-19)<br>entire document | 1-26 |

Form PCT/ISA/210 (second sheet) (January 2015)

<table>
<thead>
<tr><th colspan="3" align="center">INTERNATIONAL SEARCH REPORT</th><th colspan="2">International application No.</th></tr>
<tr><th colspan="3" align="center">Information on patent family members</th><th colspan="2" align="center">PCT/CN2021/071747</th></tr>
</thead>
</table>

| Patent document cited in search report | | | Publication date (day/month/year) | Patent family member(s) | | | Publication date (day/month/year) |
|---|---|---|---|---|---|---|---|
| CN | 111277309 | A | 12 June 2020 | None | | | |
| CN | 109428177 | A | 05 March 2019 | None | | | |
| CN | 102122976 | A | 13 July 2011 | US | 8908788 | B2 | 09 December 2014 |
| | | | | EP | 2522084 | B1 | 31 May 2017 |
| | | | | US | 2012275531 | A1 | 01 November 2012 |
| | | | | EP | 2522084 | A4 | 11 May 2016 |
| | | | | JP | 2013516866 | A | 13 May 2013 |
| | | | | KR | 20120135227 | A | 12 December 2012 |
| | | | | WO | 2011082654 | A1 | 14 July 2011 |
| | | | | CN | 105530035 | A | 27 April 2016 |
| | | | | KR | 101460549 | B1 | 12 November 2014 |
| | | | | EP | 2522084 | A1 | 14 November 2012 |
| | | | | JP | 5686820 | B2 | 18 March 2015 |
| CN | 106712800 | A | 24 May 2017 | None | | | |
| CN | 103887613 | A | 25 June 2014 | CN | 103887613 | B | 18 May 2016 |
| US | 2015256213 | A1 | 10 September 2015 | TW | I514787 | B | 21 December 2015 |
| | | | | TW | 201535985 | A | 16 September 2015 |
| US | 2019386399 | A1 | 19 December 2019 | TW | 202002407 | A | 01 January 2020 |
| | | | | TW | I675508 | B | 21 October 2019 |
| | | | | US | 10615512 | B2 | 07 April 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020100707855